# EUROPEAN PATENT SPECIFICATION

(11) **EP 3 849 339 B1**
(45) Date of publication and mention of the grant of the patent: **06.08.2025**
(21) Application number: 19859772.6
(22) Date of filing: 13.09.2019
(51) Int. Cl.: A23K 40/20, A23K 50/00, A23K 50/40, A23K 50/42, A23K 50/45, A23K 50/48, A23K 10/30

(54) **COMPOSITION AND METHOD FOR FORMING MULTILAYER EDIBLE PET PRODUCT**
ZUSAMMENSETZUNG UND VERFAHREN ZUR HERSTELLUNG EINES MEHRSCHICHTIGEN ESSBAREN PRODUKTS FÜR HAUSTIERE
COMPOSITION ET PROCÉDÉ DE MISE EN FORME D'UN PRODUIT ALIMENTAIRE MULTICOUCHE COMESTIBLE POUR ANIMAUX DE COMPAGNIE

(30) Priority: 14.09.2018 US 201862731324 P
(43) Date of publication of application: 21.07.2021
(73) Proprietor: T.F.H. Publications, Inc., Neptune City, New Jersey 07753 (US)
(72) Inventor: AXELROD, Glen S., Colts Neck, New Jersey 07722 (US); WILLIAMS, Terry, Brick, New Jersey 08723 (US)
(74) Representative: Lippert Stachow Patentanwälte Rechtsanwälte
(86) International application number: PCT/US2019/050937
(87) International publication number: WO 2020/056219

(56) References cited:
- WO-A1-2018/124880
- WO-A1-2018/124880
- WO-A1-2020/005061
- WO-A1-98/43493
- US-A1- 2006 193 959
- US-A1- 2007 212 456

## Description

### Field

The present disclosure is directed at a composition and method for forming an edible pet product having a surface with different physical characteristics than the core. The product can be prepared by a single injection molding cycle wherein dissimilar surface characteristics are developed in the mold and based upon the selected formulations and associated injection molding conditions.

### Background

The prior art is replete with numerous reports of pet chew formulations, and in particular edible formulations, that are capable of being formed via injection molding protocols. For example, in U.S. Patent No. 5,827,565, owned by T.F.H. Publications, Inc., there is disclosed a process for making a heat expandable dog chew comprised primarily of injection molding potato starch granules and an attractant.

In U.S. Patent No. 8,124,156 there is disclosed a method of manufacturing a multicomponent pet treat or chew comprising two or more materials which may differ in some physical, optical, nutritional, sensual or compositional property, wherein the multiplicity of material may be formed to lie adjacent one another in layered, surrounding, partially surrounding, abutting or interlocked fashion. In one exemplary embodiment, two or more materials may be injection molded by forming a first shape from the first material in a first mold cavity, followed by moving the first molded shape to a second mold cavity to form the second material adjacent and in contact with at least portion of the first material.

WO 2018/124880 A1 discloses a pet chew product comprising a skin of a first thermoplastic starch-based material enveloping a core of a second thermoplastic starch-based material, wherein the first and second thermoplastic starch-based materials may be the same or different, the core having a density or hardness lower than the skin, wherein the pet chew product is produced under constrained cooling conditions.

US 2006/193959 A1 discloses injection molded starch-based chew products which are tough, non-brittle, non-slimy, quick to hydrate, low calorie and high in total dietary fiber. The starch-based chew products are formulated from a combination of resistant starch and pregelatinized starch or pre-cooked flour along with plasticizer, water, lubricants and other optional ingredients.

US 2007/212456 A1 discloses animal chew obtained by molding and having a core portion and a body portion, wherein the core portion has different properties than the body portion.

As may therefore be appreciated, it would be highly advantageous to develop a formulation and method, that would provide the ability to form a multilayered pet treat or chew, from a single formulation, where the surface has a different physical, optical, nutritional, sensual or compositional property from the core and in a single injection molding cycle.

### Brief Description of the Drawings

Features and advantages of the claimed subject matter will be apparent from the following detailed description of embodiments consistent therewith, which description should be considered with reference to the accompanying drawings, wherein:
FIG. 1 schematically illustrates on example of a molded article formed from an edible pet treat or chew formulation, consistent with the present disclosure; and
FIG. 2 is a flow diagram of example operations of a method of forming a molded article from an edible pet treat or chew formulation consistent with the present disclosure.

### Detailed Description

According to the invention a method for manufacturing an edible pet treat or chew formulation according to claim 1 and a molded pet treat or chew according to claim 9 is provided. Preferred embodiments are given in the dependent claims.

The present disclosure generally relates to edible pet treat or chew formulations, molded pet treats or chews formed from such formulations, and methods of forming a pet treat or chew from such formulations. In non-limiting embodiments, the present disclosure relates to an edible pet treat or chew formulations that, upon injection molding, provide a multi-layered pet treat where the layers differ in some physical or optical property. In further embodiments, the present disclosure relates to methods of forming a pet treat or chew, such as a multiple layer (e.g., two or more layer) pet treat or chew in a single injection molding cycle, wherein the pet treat or chew includes an outer layer disposed on the surface of a core, wherein the outer layer and the core have different corresponding characteristics/properties, such as different corresponding physical, optical, nutritional, sensual or compositional property than the inner core of the molded product. In such context, a difference in a physical property may include a different hardness or tensile strength. A difference in an optical property may be understood herein as a difference in color. A difference in a nutritional property may be understood as a difference in, e.g., vitamin or mineral content, calories, protein level/amount, starch level/amount, etc. A difference in sensual properties may be understood as a difference in attractant level/amount. A difference in compositional properties may be understood as a difference in chemical structure of one or more ingredients relied upon to formulate the treat.

The method of the present invention is a method comprising:subjecting an edible pet treat or chew formulation to a single injection molding cycle to form a molded product;wherein the edible pet treat or chew formulation comprises a vegetable component and one or more edible components, the one or more edible components comprising starch;subjecting the edible pet treat or chew formulation to a single injection molding cycle comprises a single injection of the edible pet treat or chew formulation into a mold, wherein the mold is set to a temperature ranging from 10 °C to 40 °C; and wherein the molded product comprises a core formed by the single injection of the edible pet treat or chew formulation and an outer layer on the core, the outer layer formed of the vegetable component and by the single injection of the edible pet treat or chew formulation and having a first physical or optical property that differs from a corresponding second physical or optical property of the core, respectively, and having a thickness in a range of 0.0254 mm to 1.016 mm (0.001 inch to 0.040 inch); wherein the vegetable component is a water soluble vegetable powder having a particle size in a range of 10 micron to 750 micron and is present in an amount ranging from 0.1% to 15.0% by weight, relative to the total weight of the edible pet treat or chew formulation; and the starch is present in an amount greater than or equal to 50% by weight of the edible pet treat or chew formulation.

As using herein, the term "corresponding" when used in reference to a first characteristic/property of a first of a pet treat or chew (e.g., an outer layer) means that the first characteristic/property is of the same type (e.g., physical, optical, nutritional, sensual or compositional property), as a second characteristic/property of a second portion of a pet treat or chew (e.g., a core), but does not indicate that the first and second characteristics/properties are identical to one another. For example, an outer layer of a pet chew may have a first color and the core of the pet chew may have a second color. In such instances, the first color and the second color may be referred to as corresponding characteristics/properties in that they are both colors. However, the first color need not be identical to the second color.

Preferably, the edible pet treat or chew formulation herein is one or a mixture of edible components (described more fully herein), along with a selected amount of a vegetable component. When injected into a mold, the edible pet treat or chew formulation (and, more particularly, the vegetable component) exhibits a thermal response that results in the production of a molded product having a core and an outer layer on the core, wherein the outer layer has at least one physical characteristic/property that differs from a corresponding characteristic/property of the core. In particular, the vegetable component in the edible pet treat or chew formulation is selected such that it forms an outer layer on the core, wherein the outer layer exhibits an optical property (e.g. a color) that differs from a corresponding optical property of the core, which is formed from the mixture of edible components.

The molded pet treat or pet chew of the present invention is a molded pet treat or chew comprising: an edible pet treat or chew formulation that comprises a vegetable component and one or more edible components, the one or more edible components comprising starch; a core formed by the edible pet treat or chew formulation; an outer layer on the core, the outer layer formed by the edible pet treat or chew formulation; and said outer layer having a first physical or optical property that differs from a corresponding second physical or optical property of the core, respectively, and having a thickness in a range of 0.0254 mm to 1.016 mm (0.001 inch to 0.040 inch); wherein the vegetable component is a water soluble vegetable powder having a particle size in a range of 10 micron to 750 micron and is present in an amount ranging from 0.1% to 15.0% by weight, relative to the total weight of the edible pet treat or chew formulation; and the starch is present in an amount greater than or equal to 50% by weight of the edible pet treat or chew formulation.

Non-limiting examples of suitable vegetable powders that may be used as or in the vegetable component include a powder made from any common vegetable, such as but not limited to beets. In embodiments, the vegetable powder is sourced from the beetroot portion of the beet plant. In embodiments, the vegetable component is beet powder, and is present in the edible pet treat or chew formulation in any suitable amount, such as from 0.1% to 15.0% by weight, more preferably from 0.1% to 10.0% by weight, and even more preferably, from 3.0% to 5.0% by weight. Regardless of the type of vegetable powder used, the particle size of the vegetable powder ranges from 10 µm to 750 µm. Said vegetable component is formed from water soluble vegetable powder.

The edible pet treat or chew formulation is starch based, meaning that the edible pet treat or chew formulation contains starch in an amount ranging from greater than or equal to 50% by weight. More preferably, starch is present in the edible pet treat or chew formulation in an amount ranging from 50% by weight to 75% by weight, and even more preferably, in an amount ranging from 50% by weight to 60% by weight.

The starch may be sourced from a single source or multiple sources. Non-limiting examples of suitable starches that may be used as or in the edible pet treat or chew formulation include cereal starch, corn starch, potato starch, tapioca starch, components thereof, and the like. In embodiments, the starch is cereal starch, corn starch, potato starch, or tapioca starch.

In embodiments the total weight of the vegetable component and starch equals 100 % by weight of the edible pet treat or chew formulation. In other embodiments, the edible pet treat or chew formulation includes the vegetable component, starch, and one or more additives. Non-limiting examples of suitable additives that may be used in the edible pet treat or chew formulation include: glycerin in an amount ranging from 10.0 % by weight to 20.0 % by weight; gelatin in an amount ranging from 5.0% by weight to 15.0 % by weight; a palatability enhancer in an amount ranging from 1.0% by weight to 10.0 % by weight; calcium carbonate in an amount ranging from 1.0% by weight to 5.0% by weight; cellulose fiber in an amount ranging from 1.0 % by weight to 5.0% by weight; and/or lecithin powder in an amount ranging from 0.1% by weight to 2.5% by weight, wherein the indicated weight percentages are relative to the total weight of the edible pet treat or chew formulation. The edible pet treat or chew formulation includes greater than or equal to 50% by weight of starch, and includes one, a combination of, or all the additives noted above in an amount falling within the above noted ranges,

In embodiments the edible pet treat or chew composition includes: starch in an amount ranging from 50% by weight to 75% by weight (e.g., 50 to 60% by weight), glycerin in an amount ranging from 10.0 % by weight to 20.0 % by weight of the edible composition; gelatin in an amount ranging from 5.0% by weight to 15.0 % by weight; a palatability enhancer in an amount ranging from 1.0% by weight to 10.0 % by weight; calcium carbonate in an amount ranging from 1.0% by weight to 5.0% by weight; cellulose fiber in an amount ranging from 1.0 % by weight to 5.0% by weight; and lecithin powder in an amount ranging from 0.1% by weight to 2.5% by weight, wherein the indicated weight percentages are relative to the total weight of the edible pet treat or chew formulation. In some embodiments, the total weight of the vegetable component, starch, and additives (glycerin, gelatin, palatability enhancer, calcium carbonate, cellulose fiber, and lecithin powder) equals 100% by weight of the edible pet treat or chew formulation.

In still further embodiments the edible pet treat or chew formulation includes a vegetable component, starch, (optionally) one or more additives noted above, and optionally further includes a meat flavoring (e.g., roast beef flavoring, bacon flavoring, chicken flavoring, etc.) or a combination thereof. In embodiments, the edible pet treat or chew formulation includes the vegetable component, starch, and one or more of the additives noted above (e.g., in the above noted amounts, and further includes meat flavoring (e.g., lamb meal) in an amount ranging from 0.1% by weight to 5.0% by weight; roast beef flavor at a level of 0.1 % by weight to 5.0 % by weight, bacon flavor at a level of 0.1% by weight to 5.0 % by weight; chicken flavoring at a level of 0.1 % by weight to 5.0 % by weight, wherein the indicated weight percentages are relative to the total weight of the edible pet treat or chew formulation, and the total amount of the vegetable component, starch, additives (if any), meat flavoring, roast beef flavoring, bacon flavoring, and chicken flavoring equals 100 weight % of the edible pet treat or chew formulation.

The edible pet treat or chew formulation may include or be combined with a selected amount of water such that it plasticates better during molding, relative to a formulation that does not include the selected amount of water. **In** embodiments, the edible pet treat or chew formulation includes or be combined with 1.0 % by weight to 20.0% by weight of water, relative to the total weight of the edible pet treat or chew formulation.

The edible molded pet treat or chew formulation may be extruded to form pellets, which may be subsequently injection molded into a molded product (e.g., an edible pet treat or chew). Alternatively, the edible pet treat or chew formulation may be directly injection molded to form the molded product. In either case, the edible pet treat or chew formulation (optionally including from 1.0 % by weight to 20.0% by weight of water) is preferably injection molded in a mold, wherein the mold temperature is set to a temperature ranging from 10 °C to 40 °C, more preferably 15 °C to 35 °C.

It has been found that when the edible pet treat or chew formulation is injected into a mold during injection molding (directly or following extrusion), the resulting molded product (i.e., molded pet treat or chew) includes a core and an outer layer on the surface of the core, wherein the outer layer has a first characteristic, the core has a second characteristic corresponding to the first characteristic, and the first characteristic differs from the second characteristic. For example, in embodiments the first characteristic (of the outer layer) is color, the second characteristic (of the core) is color, but the first characteristic (color) differs from the second characteristic (color). In such instances the color of the outer layer is different than the color of the core.

The outer layer of the molded product has a thickness in the range of 0.0254 mm to 1.016 mm (0.001 inch to 0.040 inch), more preferably in the range of 0.203 mm to 0.508 mm (0.008 inch to 0.020 inch). Without being bound by any particular theory, it is contemplated that the vegetable powder herein, upon contact with the mold surface and oxygen, undergoes a thermal response and a color change, so that the surface of the demolded product has an outer layer on the surface of a core, wherein the outer layer has a different physical appearance than the core. Notably, development of the outer layer and the different in physical properties occurs during a single injection molding cycle.

FIG. 1 illustrates one example of a molded product (e.g., a molded pet treat or chew consistent with the present disclosure. Molded product 100 includes a core 101 and an outer layer 103 disposed on the core. In embodiments, outer layer 103 includes the vegetable component of the edible pet treat or chew formulation that was used to form molded product 100, where the outer layer 103 has a different characteristic, such as a different color. The core 101 may be formed from the mixture of edible components with the vegetable component of the edible pet treat or chew formulation. As discussed above, the outer layer 103 may have a first characteristic that corresponds to a second characteristic of the core, wherein the first and second characteristics differ from one another. For example, as noted, in some instances the outer layer 103 is a first color, the core 101 is a second color, and the first and second colors differ from one another. It is noted that while FIG. 1 depicts molded product 100 as having a generally spherical cross section, the compositions, molded products, and methods described herein are not limited to the illustrated shape. Indeed, the compositions and methods described herein may be used to form molded products (e.g., molded pet treats or chews) having any suitable shape, such as but not limited to shapes having a circular, ellipsoidal, oval, triangular, quadrilateral pentagonal, hexagonal, etc., or irregular cross section.

Accordingly, one now can readily identify an edible pet treat or chew formulation that, upon a single injection molding cycle, provides a molded pet treat or chew that includes a core and a surface layer, wherein the surface layer has at least one surface characteristic (e.g. color) that is different from a corresponding characteristic (e.g., color) of the core. As such one can now, e.g., in a single injection molding cycle, produce a pet chew such as an edible bone, where the exterior surface has a first color (e.g., a natural brown color) and the interior has a second color (e.g., a natural red type coloration, representative of a meat type filling).

Another aspect of the present disclosure relates to methods of forming molded articles, such as methods of forming molded pet treats or chews. In that regard reference is made to FIG. 2, which is a flow chart of example operations of one example of a method of forming a molded article (e.g., pet treat or chew) consistent with the present disclosure. As shown, method 200 begins at block 201. The method may then proceed to optional block 201, pursuant to which an edible pet treat or chew formulation may be provided. When executed, the operations of optional block 201 may include mixing a vegetable component with one or more edible components, to form an edible pet treat or chew formulation having the above described composition. Alternatively, the operations of block 203 may be omitted, e.g., in instances where an edible pet treat or chew formulation is obtained through some other means, e.g., from a third party. Following the operations of block 203 (or when block 203 is omitted) the method may proceed to optional block 205, pursuant to which the edible pet treat or chew formulation may be pelletized. In that regard, any suitable process may be used to produce pellets and/or granules of the edible pet treat or chew formulation with a desired size and geometry. Without limitation, in embodiments the operations of block 205 include extruding an edible pet treat or chew formulation in an extruder to form an extrudate, wherein the extrudate is in the form of or is subsequently processed (e.g., via cutting) into pellets/granules. As will be understood by those of skill in the art, the size and shape of the pellets/granules may be controlled in several ways, such as by the appropriate selection and/or configuration of an extrusion head. Prior to extrusion, the edible pet treat or chew formulation may include or be combined with water to facilitate plastication as noted above.

Following the operations of block 205 (or when block 205 is omitted) the method may proceed to block 207, pursuant to which the edible pet treat or chew formulation (or pellets/granules thereof) is injection molded to form a molded article, such as a molded pet treat or chew. In embodiments, operations pursuant to block 207 may be or include injecting the edible pet treat or chew formulation into a mold, wherein the mold temperature is set to a temperature ranging from 10 °C to 40 °C, more preferably 15 °C to 35 °C. The resulting molded article may have an outer layer on a core, wherein the outer layer has at least one characteristic that differs from a corresponding characteristic of the core, as described above. Notably, the edible pet treat or chew formulation is subject to only a single injection molding cycle to block 207. Following the operations of block 207, the method may proceed to block 209 and end.

The process of the present invention, which is defined by the claims, may result in: (1) providing an edible based formulation containing 0.1 % by weight to 10.0% by weight of a powder vegetable component; (2) introducing said edible based formulation into an injection molding machine and injection molding one or a plurality of edible pet products having a surface layer and a core, wherein during molding of said edible pet product, the surface layer of the pet product develops a physical or optical property that is different from the core region. Accordingly, one may now form edible pet products that provide a very natural appearance, such as a pet bone having an outer surface typical of natural bone color and an interior color typical of a meat type filling or bone marrow. Remarkably, such product can now be produced in a single injection molding cycle, without having to separately treat the surface or separately mold onto the surface, a different edible composition.

The following examples which all are not according to the claimed invention, illustrate some of its embodiments.

### Examples

**Example 1:** According to this example there is provided an edible pet treat or chew formulation, including a mixture of: a vegetable component; and one or more edible components, the one or more edible components including starch; wherein: the edible pet treat or chew formulation, when subject to a single injection molding cycle, forms a molded product including a core and an outer layer on the core, the outer layer having a first characteristic that differs from a corresponding second characteristic of the core.

**Example 2:** This example includes any or all of the features of example 1, wherein: the vegetable component includes a vegetable powder (e.g., beet powder) and is present in an amount ranging from .1% to 15.0% by weight, relative to the total weight of the edible pet treat or chew formulation; and the starch is present in an amount greater than or equal to 50% by weight of the edible pet treat or chew formulation.

**Example 3:** This example includes any or all of the features of example 2, wherein: the vegetable component is present in an amount ranging from 0.1 to 10% by weight, relative to the total weight of the edible pet treat or chew formulation; and the starch is present in an amount ranging from 50 to 75 % by weight, relative to the total weight of the edible pet treat or chew formulation.

**Example 4:** This example includes any or all of the features of example 3, wherein: the vegetable component comprises beet (e.g., beet powder) and is present in an amount ranging from 3 to 5% by weight, relative to the total weight of the edible pet treat or chew formulation; and the starch is present in an amount ranging from 50 to 60 % by weight, relative to the total weight of the edible pet treat or chew formulation.

**Example 5:** This example includes any or all of the features of any one of examples 2 to 4, wherein the first characteristic is a first color, the second characteristic is a second color that differs from the first color.

**Example 6:** This example includes any or all of the features of any one of examples 2 to 5, further including one or more additives selected from the group consisting of: glycerin in an amount ranging from 10.0 to 20.0 % by weight relative to the total weight of the edible pet treat or chew formulation; gelatin in an amount ranging from 5.0% to 15.0 % by weight relative to the total weight of the edible pet treat or chew formulation; a palatability enhancer in an amount ranging from 1.0% by weight to 10.0 % by weight relative to the total weight of the edible pet treat or chew formulation; calcium carbonate in an amount ranging from 1.0% by weight to 5.0% by weight relative to the total weight of the edible pet treat or chew formulation; cellulose fiber in an amount ranging from 1.0 % by weight to 5.0% by weight relative to the total weight of the edible pet treat or chew formulation; and lecithin powder in an amount ranging from 0.1% by weight to 2.5% by weight relative to the total weight of the edible pet treat or chew formulation.

**Example 7:** This example includes any or all of the features of example 6, wherein the one or more additives comprise: glycerin in an amount ranging from 10.0 to 20.0 % by weight relative to the total weight of the edible pet treat or chew formulation; gelatin in an amount ranging from 5.0% to 15.0 % by weight relative to the total weight of the edible pet treat or chew formulation; a palatability enhancer in an amount ranging from 1.0% by weight to 10.0 % by weight relative to the total weight of the edible pet treat or chew formulation; calcium carbonate in an amount ranging from 1.0% by weight to 5.0% by weight relative to the total weight of the edible pet treat or chew formulation; cellulose fiber in an amount ranging from 1.0 % by weight to 5.0% by weight relative to the total weight of the edible pet treat or chew formulation; and lecithin powder in an amount ranging from 0.1% by weight to 2.5% by weight relative to the total weight of the edible pet treat or chew formulation.

**Example 8:** According to this example there is provided a method, including: subjecting an edible pet treat or chew formulation to a single injection molding cycle to form a molded product; wherein: the edible pet treat or chew formulation includes a vegetable component and one or more edible components, the one or more edible components including starch; subjecting the edible pet treat or chew formulation to a single injection molding cycle includes injecting the edible pet treat or chew formulation into a mold, wherein the mold is set to a temperature ranging from 10 °C to 40 °C; and the molded product includes a core and an outer layer on the core, the outer layer having a first characteristic that differs from a corresponding second characteristic of the core.

**Example 9:** This example includes any or all of the features of example 8, wherein subjecting the edible pet treat or chew formulation to a single injection molding cycle includes injecting the edible pet treat or chew formulation into a mold, wherein the mold is set to a temperature ranging from 15 °C to 35 °C.

**Example 10:** This example includes any or all of the features of example 8, wherein: the vegetable component includes a vegetable powder (e.g., beet powder) and is present in an amount ranging from .1% to 15.0% by weight, relative to the total weight of the edible pet treat or chew formulation; and the starch is present in an amount greater than or equal to 50% by weight of the edible pet treat or chew formulation.

**Example 11:** This example includes any or all of the features of example 8, wherein: the vegetable component is present in an amount ranging from 0.1 to 10% by weight, relative to the total weight of the edible pet treat or chew formulation; and the starch is present in an amount ranging from 50 to 75 % by weight, relative to the total weight of the edible pet treat or chew formulation.

**Example 12:** This example includes any or all of the features of example 8, wherein: the vegetable component comprises beet (e.g., beet powder) and is present in an amount ranging from 3 to 5% by weight, relative to the total weight of the edible pet treat or chew formulation; and the starch is present in an amount ranging from 50 to 60 % by weight, relative to the total weight of the edible pet treat or chew formulation.

**Example 13:** This example includes any or all of the features of any one of examples 8 to 12, wherein the first characteristic is a first color, the second characteristic is a second color that differs from the first color.

**Example 14:** This example includes any or all of the features of any one of examples 8 to 13, wherein the edible pet treat or chew formulation further includes one or more additives selected from the group consisting of: glycerin in an amount ranging from 10.0 to 20.0 % by weight relative to the total weight of the edible pet treat or chew formulation; gelatin in an amount ranging from 5.0% to 15.0 % by weight relative to the total weight of the edible pet treat or chew formulation; a palatability enhancer in an amount ranging from 1.0% by weight to 10.0 % by weight relative to the total weight of the edible pet treat or chew formulation; calcium carbonate in an amount ranging from 1.0% by weight to 5.0% by weight relative to the total weight of the edible pet treat or chew formulation; cellulose fiber in an amount ranging from 1.0 % by weight to 5.0% by weight relative to the total weight of the edible pet treat or chew formulation; and lecithin powder in an amount ranging from 0.1% by weight to 2.5% by weight relative to the total weight of the edible pet treat or chew formulation.

**Example 15:** This example includes any or all of the features of example 14, wherein the one or more additives comprise: glycerin in an amount ranging from 10.0 to 20.0 % by weight relative to the total weight of the edible pet treat or chew formulation; gelatin in an amount ranging from 5.0% to 15.0 % by weight relative to the total weight of the edible pet treat or chew formulation; a palatability enhancer in an amount ranging from 1.0% by weight to 10.0 % by weight relative to the total weight of the edible pet treat or chew formulation; calcium carbonate in an amount ranging from 1.0% by weight to 5.0% by weight relative to the total weight of the edible pet treat or chew formulation; cellulose fiber in an amount ranging from 1.0 % by weight to 5.0% by weight relative to the total weight of the edible pet treat or chew formulation; and lecithin powder in an amount ranging from 0.1% by weight to 2.5% by weight relative to the total weight of the edible pet treat or chew formulation.

**Example 16:** According to this example there is provided a molded pet treat or chew, including: a core; and an outer layer on the core; wherein the molded pet treat or chew includes an edible pet treat or chew formulation that includes a vegetable component and one or more edible components, the one or more edible components including starch; and the outer layer has a first characteristic that differs from a corresponding second characteristic of the core.

**Example 17:** This example includes any or all of the features of example 16, wherein: the vegetable component includes a vegetable powder (e.g., beet powder) and is present in an amount ranging from .1% to 15.0% by weight, relative to the total weight of the edible pet treat or chew formulation; and the starch is present in an amount greater than or equal to 50% by weight of the edible pet treat or chew formulation.

**Example 18:** This example includes any or all of the features of example 17, wherein: the vegetable component is present in an amount ranging from 0.1 to 10% by weight, relative to the total weight of the edible pet treat or chew formulation; and the starch is present in an amount ranging from 50 to 75 % by weight, relative to the total weight of the edible pet treat or chew formulation.

**Example 19:** This example includes any or all of the features of example 17, wherein: the vegetable component comprises beet (e.g., beet powder) and is present in an amount ranging from 3 to 5% by weight, relative to the total weight of the edible pet treat or chew formulation; and the starch is present in an amount ranging from 50 to 60 % by weight, relative to the total weight of the edible pet treat or chew formulation.

**Example 20:** This example includes any or all of the features of any one of examples 17 to 19, wherein the first characteristic is a first color, the second characteristic is a second color that differs from the first color.

**Example 21:** This example includes any or all of the features of any one of examples 17 to 20, wherein the edible pet treat or chew formulation further includes one or more additives selected from the group consisting of: glycerin in an amount ranging from 10.0 to 20.0 % by weight relative to the total weight of the edible pet treat or chew formulation; gelatin in an amount ranging from 5.0% to 15.0 % by weight relative to the total weight of the edible pet treat or chew formulation; a palatability enhancer in an amount ranging from 1.0% by weight to 10.0 % by weight relative to the total weight of the edible pet treat or chew formulation; calcium carbonate in an amount ranging from 1.0% by weight to 5.0% by weight relative to the total weight of the edible pet treat or chew formulation; cellulose fiber in an amount ranging from 1.0 % by weight to 5.0% by weight relative to the total weight of the edible pet treat or chew formulation; and lecithin powder in an amount ranging from 0.1% by weight to 2.5% by weight relative to the total weight of the edible pet treat or chew formulation.

**Example 22:** This example includes any or all of the features of example 21, wherein the one or more additives comprise: glycerin in an amount ranging from 10.0 to 20.0 % by weight relative to the total weight of the edible pet treat or chew formulation; gelatin in an amount ranging from 5.0% to 15.0 % by weight relative to the total weight of the edible pet treat or chew formulation; a palatability enhancer in an amount ranging from 1.0% by weight to 10.0 % by weight relative to the total weight of the edible pet treat or chew formulation; calcium carbonate in an amount ranging from 1.0% by weight to 5.0% by weight relative to the total weight of the edible pet treat or chew formulation; cellulose fiber in an amount ranging from 1.0 % by weight to 5.0% by weight relative to the total weight of the edible pet treat or chew formulation; and lecithin powder in an amount ranging from 0.1% by weight to 2.5% by weight relative to the total weight of the edible pet treat or chew formulation.

## Claims

1. A method, comprising:
subjecting an edible pet treat or chew formulation to a single injection molding cycle to form a molded product;
wherein the edible pet treat or chew formulation comprises a vegetable component and one or more edible components, the one or more edible components comprising starch;
subjecting the edible pet treat or chew formulation to a single injection molding cycle comprises a single injection of the edible pet treat or chew formulation into a mold, wherein the mold is set to a temperature ranging from 10 °C to 40 °C; and
wherein the molded product comprises a core formed by the single injection of the edible pet treat or chew formulation and an outer layer on the core, the outer layer formed of the vegetable component and by the single injection of the edible pet treat or chew formulation and having a first physical or optical property that differs from a corresponding second physical or optical property of the core, respectively, and having a thickness in a range of 0.0254 mm to 1.016 mm (0.001 inch to 0.040 inch);
wherein the vegetable component is a water soluble vegetable powder having a particle size in a range of 10 µm to 750 µm and is present in an amount ranging from 0.1% to 15.0% by weight, relative to the total weight of the edible pet treat or chew formulation; and
the starch is present in an amount greater than or equal to 50% by weight of the edible pet treat or chew formulation.

2. The method of claim 1, wherein subjecting the edible pet treat or chew formulation to a single injection molding cycle comprises injecting the edible pet treat or chew formulation into a mold, wherein the mold is set to a temperature ranging from 15 °C to 35 °C.

3. The method of claim 1, wherein:
the edible pet treat or chew formulation is one or a mixture of edible components comprising a selected amount of the vegetable component powder, wherein when the formulation is injected into the mold, the edible pet treat or chew formulation exhibits a thermal response that results in the production of the molded product having the core and the outer layer on the core, wherein the outer layer has at least one physical or optical property that differs from a corresponding property of the core.

4. The method of claim 1, wherein:
the vegetable powder is beet powder.

5. The method of claim 1, wherein:
the vegetable powder is present in an amount ranging from 0.1 to 10% by weight, relative to the total weight of the edible pet treat or chew formulation; and
said starch is present in an amount ranging from 50 to 75 % by weight, relative to the total weight of the edible pet treat or chew formulation.

6. The method of claim 1, wherein:
the vegetable powder comprises beet and is present in an amount ranging from 3 to 5% by weight, relative to the total weight of the edible pet treat or chew formulation; and
said starch is present in an amount ranging from 50 to 60 % by weight, relative to the total weight of the edible pet treat or chew formulation.

7. The method of claim 1, wherein the first physical or optical property is a first color, the second physical or optical property is a second color that differs from the first color.

8. The method of claim 1, wherein
(i) the edible pet treat or chew formulation further comprises one or more additives selected from the group consisting of:
glycerin in an amount ranging from 10.0 to 20.0 % by weight relative to the total weight of the edible pet treat or chew formulation;
gelatin in an amount ranging from 5.0% to 15.0 % by weight relative to the total weight of the edible pet treat or chew formulation;
a palatability enhancer in an amount ranging from 1.0% by weight to 10.0 % by weight relative to the total weight of the edible pet treat or chew formulation;
calcium carbonate in an amount ranging from 1.0% by weight to 5.0% by weight relative to the total weight of the edible pet treat or chew formulation;
cellulose fiber in an amount ranging from 1.0 % by weight to 5.0% by weight relative to the total weight of the edible pet treat or chew formulation; and
lecithin powder in an amount ranging from 0.1% by weight to 2.5% by weight relative to the total weight of the edible pet treat or chew formulation;
or
(ii) wherein the one or more additives comprise:
glycerin in an amount ranging from 10.0 to 20.0 % by weight relative to the total weight of the edible pet treat or chew formulation;
gelatin in an amount ranging from 5.0% to 15.0 % by weight relative to the total weight of the edible pet treat or chew formulation;
a palatability enhancer in an amount ranging from 1.0% by weight to 10.0 % by weight relative to the total weight of the edible pet treat or chew formulation;
calcium carbonate in an amount ranging from 1.0% by weight to 5.0% by weight relative to the total weight of the edible pet treat or chew formulation;
cellulose fiber in an amount ranging from 1.0 % by weight to 5.0% by weight relative to the total weight of the edible pet treat or chew formulation; and
lecithin powder in an amount ranging from 0.1% by weight to 2.5% by weight relative to the total weight of the edible pet treat or chew formulation.

9. A molded pet treat or chew, comprising:
an edible pet treat or chew formulation that comprises a vegetable component and one or more edible components, the one or more edible components comprising starch;
a core formed by the edible pet treat or chew formulation;
an outer layer on the core, the outer layer formed by the edible pet treat or chew formulation; and
said outer layer having a first physical or optical property that differs from a corresponding second physical or optical property of the core, respectively, and having a thickness in a range of 0.0254 mm to 1.016 mm (0.001 inch to 0.040 inch);
wherein the vegetable component is a water soluble vegetable powder having a particle size in a range of 10 µm to 750 µm and is present in an amount ranging from 0.1% to 15.0% by weight, relative to the total weight of the edible pet treat or chew formulation; and
the starch is present in an amount greater than or equal to 50% by weight of the edible pet treat or chew formulation.

10. The molded pet treat or chew of claim 9, wherein:
the vegetable powder is beet powder.

11. The molded pet treat or chew of claim 10, wherein:
the vegetable powder is present in an amount ranging from 0.1 to 10% by weight, relative to the total weight of the edible pet treat or chew formulation; and
said starch is present in an amount ranging from 50 to 75 % by weight, relative to the total weight of the edible pet treat or chew formulation.

12. The molded pet treat or chew of claim 10, wherein:
the vegetable powder comprises beet and is present in an amount ranging from 3 to 5% by weight, relative to the total weight of the edible pet treat or chew formulation; and
said starch is present in an amount ranging from 50 to 60 % by weight, relative to the total weight of the edible pet treat or chew formulation.

13. The molded pet treat or chew of claim 10, wherein the first physical or optical property is a first color, the second physical or optical property is a second color that differs from the first color.

14. The molded pet treat or chew of claim 10, wherein the edible pet treat or chew formulation further comprises one or more additives selected from the group consisting of:
glycerin in an amount ranging from 10.0 to 20.0 % by weight relative to the total weight of the edible pet treat or chew formulation;
gelatin in an amount ranging from 5.0% to 15.0 % by weight relative to the total weight of the edible pet treat or chew formulation;
a palatability enhancer in an amount ranging from 1.0% by weight to 10.0 % by weight relative to the total weight of the edible pet treat or chew formulation;
calcium carbonate in an amount ranging from 1.0% by weight to 5.0% by weight relative to the total weight of the edible pet treat or chew formulation;
cellulose fiber in an amount ranging from 1.0 % by weight to 5.0% by weight relative to the total weight of the edible pet treat or chew formulation; and
lecithin powder in an amount ranging from 0.1% by weight to 2.5% by weight relative to the total weight of the edible pet treat or chew formulation.

15. The edible pet treat or chew formulation of claim 14, wherein the one or more additives comprise:
glycerin in an amount ranging from 10.0 to 20.0 % by weight relative to the total weight of the edible pet treat or chew formulation;
gelatin in an amount ranging from 5.0% to 15.0 % by weight relative to the total weight of the edible pet treat or chew formulation;
a palatability enhancer in an amount ranging from 1.0% by weight to 10.0 % by weight relative to the total weight of the edible pet treat or chew formulation;
calcium carbonate in an amount ranging from 1.0% by weight to 5.0% by weight relative to the total weight of the edible pet treat or chew formulation;
cellulose fiber in an amount ranging from 1.0 % by weight to 5.0% by weight relative to the total weight of the edible pet treat or chew formulation; and
lecithin powder in an amount ranging from 0.1% by weight to 2.5% by weight relative to the total weight of the edible pet treat or chew formulation.

## Patentansprüche

1. Verfahren, umfassend:
dass eine Formulierung für essbare Leckerbissen oder Kauprodukte für Haustiere einem einzigen Spritzgusszyklus unterzogen wird, um ein geformtes Produkt herzustellen; wobei die essbare Haustier-Leckerbissen- und Kauproduktformulierung eine pflanzliche Komponente und eine oder mehrere essbare Komponenten aufweist, wobei die eine oder mehreren essbaren Komponenten Stärke enthalten;
dass die Ausführung eines einzigen Spritzgusszyklus an der essbaren Haustier-Leckerbissen- oder Kauproduktformulierung ein einmaliges Einspritzen der essbaren Haustier-Leckerbissen- oder Kauproduktformulierung in eine Form umfasst, wobei die Form auf eine Temperatur im Bereich von 10°C bis 40°C eingestellt ist;
wobei das Formprodukt einen Kern hat, der durch das einmalige Einspritzen der essbaren Haustier-Leckerbissen-oder Kauproduktformulierung gebildet wird, und eine Außenschicht auf dem Kern, wobei die Außenschicht aus der pflanzlichen Komponente und durch das einmalige Einspritzen der essbaren Haustier-Leckerbissen- oder Kauproduktformulierung gebildet wird und eine erste physikalische oder optische Eigenschaft, die sich jeweils von einer entsprechenden zweiten physikalischen oder optischen Eigenschaft des Kerns unterscheidet, und eine Dicke in einem Bereich von 0,0254 mm bis 1,016 mm (0,001 Zoll bis 0,040 Zoll) aufweist;
wobei die pflanzliche Komponente ein wasserlösliches pflanzliches Pulver mit einer Partikelgröße im Bereich von 10 µm bis 750 µm ist und in einer Menge im Bereich von 0,1 bis 15,0 Gew.-%, bezogen auf das Gesamtgewicht der essbaren Haustier-Leckerbissen- oder Kauproduktformulierung, vorhanden ist; und
wobei die Stärke in einer Menge im Bereich von mindestens 50 Gew.-% der essbaren Haustier-Leckerbissen- oder Kauproduktformulierung vorhanden ist.

2. Verfahren nach Anspruch 1, wobei das Ausführen eines einzigen Spritzgusszyklus an der essbaren Haustier-Leckerbissen- oder Kauproduktformulierung das Einspritzen der essbaren Haustier-Leckerbissen- oder Kauproduktformulierung in eine Form umfasst, wobei die Form auf eine Temperatur im Bereich von 15°C bis 35°C eingestellt ist.

3. Verfahren nach Anspruch 1, wobei:
die essbare Haustier-Leckerbissen- oder Kauproduktformulierung eine essbare Komponente oder eine Mischung von essbaren Komponenten ist, die eine ausgewählte Menge des Pulvers pflanzlicher Komponenten umfasst, wobei die essbare Haustier-Leckerbissen- oder Kauproduktformulierung, wenn sie in die Form eingespritzt wird, eine thermische Reaktion zeigt, die zur Herstellung des Formprodukts mit dem Kern und der äußeren Schicht auf dem Kern führt, wobei die äußere Schicht mindestens eine physikalische oder optische Eigenschaft aufweist, die sich von einer entsprechenden Eigenschaft des Kerns unterscheidet.

4. Verfahren nach Anspruch 1, wobei:
das pflanzliche Pulver Rübenpulver ist.

5. Verfahren nach Anspruch 1, wobei:
das pflanzliche Pulver in einer Menge im Bereich von 0,1 bis 10 Gew.-%, bezogen auf das Gesamtgewicht der essbaren Haustier-Leckerbissen- oder Kauproduktformulierung, vorhanden ist; und
die Stärke in einer Menge im Bereiche von 50 bis 75 Gew.-%, bezogen auf das Gesamtgewicht der essbaren Haustier-Leckerbissen- oder Kauproduktformulierung, vorhanden ist.

6. Verfahren nach Anspruch 1, wobei:
das pflanzliche Pulver Rüben umfasst und in einer Menge im Bereich von 3 bis 5 Gew.-%, bezogen auf das Gesamtgewicht des essbaren Haustier-Leckerbissen- oder Kauproduktformulierung, vorhanden ist; und
die Stärke in einer Menge im Bereich von 50 bis 60 Gew.-%, bezogen auf das Gesamtgewicht der essbaren Haustier-Leckerbissen- oder Kauproduktformulierung, vorhanden ist.

7. Verfahren nach Anspruch 1, wobei die erste physikalische oder optische Eigenschaft eine erste Farbe ist, die zweite physikalische oder optische Eigenschaft eine zweite Farbe ist, die sich von der ersten Farbe unterscheidet.

8. Verfahren nach Anspruch 1, wobei:
(i) die essbare Haustier-Leckerbissen- oder Kauproduktformulierung einen oder mehrere Zusatzstoffe umfasst, die aus der Gruppe ausgewählt sind, die aus Folgendem besteht:
Glycerin in einer Menge im Bereich von 10,0 bis 20,0 Gew.-%, bezogen auf das Gesamtgewicht der essbaren Haustier-Leckerbissen- oder Kauproduktformulierung;
Gelatine in einer Menge im Bereich von 5,0 bis 15,0 Gew.-%, bezogen auf das Gesamtgewicht der essbaren Haustier-Leckerbissen- oder Kauproduktformulierung;
einem Geschmacksverstärker in einer Menge im Bereich von 1,0 bis 10,0 Gew.-%, bezogen auf das Gesamtgewicht der essbaren Haustier-Leckerbissen- oder Kauproduktformulierung;
Calciumcarbonat in einer Menge im Bereich von 1,0 Gew.-% bis 5,0 Gew.-%, bezogen auf das Gesamtgewicht der essbaren Haustier-Leckerbissen- oder Kauproduktformulierung;
Cellulosefaser in einer Menge im Bereich von 1,0 Gew.-% bis 5,0 Gew.-%, bezogen auf das Gesamtgewicht der essbaren Haustier-Leckerbissen- oder Kauproduktformulierung; und
Lecithinpulver in einer Menge im Bereich von 0,1 Gew.-% bis 2,5 Gew.-%, bezogen auf das Gesamtgewicht der essbaren Haustier-Leckerbissen- oder Kauproduktformulierung;
oder
(ii) wobei der eine oder die mehreren Zusatzstoffe umfassen:
Glycerin in einer Menge im Bereich von 10,0 bis 20,0 Gew.-%, bezogen auf das Gesamtgewicht der essbaren Haustier-Leckerbissen- oder Kauproduktformulierung;
Gelatine in einer Menge im Bereich von 5,0 bis 15,0 Gew.-%, bezogen auf das Gesamtgewicht der essbaren Haustier-Leckerbissen- oder Kauproduktformulierung;
einen Geschmacksverstärker in einer Menge im Bereich von 1,0 bis 10,0 Gew.-%, bezogen auf das Gesamtgewicht der essbaren Haustier-Leckerbissen- oder Kauproduktformulierung;
Calciumcarbonat in einer Menge im Bereich von 1,0 Gew.-% bis 5,0 Gew.-%, bezogen auf das Gesamtgewicht der essbaren Haustier-Leckerbissen- oder Kauproduktformulierung;
Cellulosefaser in einer Menge im Bereich von 1,0 Gew.-% bis 5,0 Gew.-%, bezogen auf das Gesamtgewicht der essbaren Haustier-Leckerbissen- oder Kauproduktformulierung; und
Lecithinpulver in einer Menge im Bereich von 0,1 Gew.-% bis 2,5 Gew.-%, bezogen auf das Gesamtgewicht der essbaren Haustier-Leckerbissen- oder Kautablettenformulierung.

9. Geformtes Haustier-Leckerbissen- oder Kauprodukt, umfassend:
eine essbare Haustier-Leckerbissen- oder Kauproduktformulierung, die eine pflanzliche Komponente und eine oder mehrere essbare Komponenten umfasst, wobei die eine oder mehreren essbaren Komponenten Stärke enthalten;
einen Kern, der durch die essbare Haustier-Leckerbissen- oder Kauproduktformulierung gebildet ist;
eine Außenschicht auf dem Kern, wobei die Außenschicht durch die essbare Haustier-Leckerbissen- oder Kauproduktformulierung gebildet ist; und
wobei die Außenschicht eine erste physikalische oder optische Eigenschaft, die sich von einer entsprechenden zweiten physikalischen oder optischen Eigenschaft des Kerns unterscheidet, und eine Dicke im Bereich von 0,0254 mm bis 1,016 mm (0,001 Zoll bis 0,040 Zoll) aufweist;
wobei die pflanzliche Komponente ein wasserlösliches pflanzliches Pulver mit einer Partikelgröße im Bereich von 10 µm bis 750 µm ist und in einer Menge im Bereich von 0,1 bis 15,0 Gew.-%, bezogen auf das Gesamtgewicht der essbaren Haustier-Leckerbissen- oder Kauproduktformulierung, vorhanden ist; und
die Stärke in einer Menge im Bereich von mindestens 50 Gew.-% der essbaren Haustier-Leckerbissen- oder Kauproduktformulierung ist.

10. Geformtes Haustier-Leckerbissen- oder Kauprodukt nach Anspruch 9, wobei:
das pflanzliche Pulver Rübenpulver ist.

11. Geformtes Haustier-Leckerbissen- oder Kauprodukt nach Anspruch 10, wobei:
das pflanzliche Pulver in einer Menge im Bereich von 0,1 bis 10 Gew.-%, bezogen auf das Gesamtgewicht der essbaren Haustier-Leckerbissen- oder Kautablettenformulierung, vorhanden ist; und
die Stärke in einer Menge im Bereich von 50 bis 75 Gew.-%, bezogen auf das Gesamtgewicht der essbaren Haustier-Leckerbissen- oder Kautablettenformulierung, vorhanden ist.

12. Geformtes Haustier-Leckerbissen- oder Kauprodukt nach Anspruch 10, wobei:
das pflanzliche Pulver Rüben enthält und in einer Menge im Bereich von 3 bis 5 Gew.-%, bezogen auf das Gesamtgewicht der essbaren Haustier-Leckerbissen- oder Kautablettenformulierung, vorhanden ist; und
die Stärke in einer Menge im Bereich von 50 bis 60 Gew.-%, bezogen auf das Gesamtgewicht der essbaren Haustier-Leckerbissen- oder Kautablettenformulierung, vorhanden ist.

13. Geformtes Haustier-Leckerbissen- oder Kauprodukt nach Anspruch 10, wobei die erste physikalische oder optische Eigenschaft eine erste Farbe ist, die zweite physikalische oder optische Eigenschaft eine zweite Farbe ist, die sich von der ersten Farbe unterscheidet.

14. Geformtes Haustier-Leckerbissen- oder Kauprodukt nach Anspruch 10, wobei die essbare Haustier-Leckerbissen- oder Kauproduktformulierung ferner einen oder mehrere Zusatzstoffe umfasst, die aus der Gruppe ausgewählt sind, die aus Folgendem besteht:
Glycerin in einer Menge im Bereich von 10,0 bis 20,0 Gew.-%, bezogen auf das Gesamtgewicht der essbaren Haustier-Leckerbissen- oder Kauproduktformulierung;
Gelatine in einer Menge im Bereich von 5,0 bis 15,0 Gew.-%, bezogen auf das Gesamtgewicht der essbaren Haustier-Leckerbissen- oder Kauproduktformulierung;
einem Geschmacksverstärker in einer Menge im Bereich von 1,0 Gew.-% bis 10,0 Gew.-%, bezogen auf das Gesamtgewicht der essbaren Haustier-Leckerbissen- oder Kauproduktformulierung;
Calciumcarbonat in einer Menge im Bereich von 1,0 Gew.-% bis 5,0 Gew.-%, bezogen auf das Gesamtgewicht der essbaren Haustier-Leckerbissen- oder Kauproduktformulierung;
Cellulosefaser in einer Menge im Bereich von 1,0 Gew.-% bis 5,0 Gew.-%, bezogen auf das Gesamtgewicht der essbaren Haustier-Leckerbissen- oder Kauproduktformulierung; und
Lecithinpulver in einer Menge im Bereich von 0,1 Gew.-% bis 2,5 Gew.-%, bezogen auf das Gesamtgewicht der essbaren Haustier-Leckerbissen- oder Kauproduktformulierung.

15. Essbare Haustier-Leckerbissen- oder Kauproduktformulierung nach Anspruch 14, wobei der eine oder die mehreren Zusatzstoffe umfassen:
Glycerin in einer Menge im Bereich von 10,0 bis 20,0 Gew.-%, bezogen auf das Gesamtgewicht der essbaren Haustier-Leckerbissen- oder Kauproduktformulierung;
Gelatine in einer Menge im Bereich von 5,0 bis 15,0 Gew.-%, bezogen auf das Gesamtgewicht der essbaren Haustier-Leckerbissen- oder Kauproduktformulierung;
einen Geschmacksverstärker in einer Menge im Bereich von 1,0 Gew.-% bis 10,0 Gew.-%, bezogen auf das Gesamtgewicht der essbaren Haustier-Leckerbissen- oder Kauproduktformulierung;
Calciumcarbonat in einer Menge im Bereich von 1,0 Gew.-% bis 5,0 Gew.-%, bezogen auf das Gesamtgewicht der essbaren Haustier-Leckerbissen- oder Kauproduktformulierung;
Cellulosefaser in einer Menge im Bereich von 1,0 Gew.-% bis 5,0 Gew.-%, bezogen auf das Gesamtgewicht der essbaren Haustier-Leckerbissen- oder Kauproduktformulierung; und
Lecithinpulver in einer Menge im Bereich von 0,1 Gew.-% bis 2,5 Gew.-%, bezogen auf das Gesamtgewicht der essbaren Haustier-Leckerbissen- oder Kauproduktformulierung.

## Revendications

1. Procédé comprenant:
soumettre une formulation de friandises ou de produits à mâcher comestibles pour animaux de compagnie à un seul cycle de moulage par injection afin de produire un produit moulé;
la formulation de friandises et de produits à mâcher comestibles pour animaux de compagnie comprenant un composant végétal et un ou plusieurs composants comestibles, le ou les composants comestibles contenant de l'amidon;
l'étape de soumettre la formulation de friandises ou de produits à mâcher comestibles pour animaux de compagnie à un seul cycle de moulage par injection comprenant une injection unique de la formulation de friandises ou de produits à mâcher comestibles pour animaux de compagnie dans un moule, le moule étant réglé à une température comprise entre 10°C et 40°C;
le produit moulé ayant un noyau qui est formé par l'injection unique de la formulation de friandise ou de produits à mâcher comestibles pour animaux de compagnie, et une couche extérieure sur le noyau, la couche extérieure étant formée à partir du composant végétal et par l'injection unique de la formulation de friandises ou de produits à mâcher comestibles pour animaux de compagnie et ayant une première propriété physique ou optique qui diffère respectivement d'une deuxième propriété physique ou optique correspondante du noyau, et une épaisseur comprise entre 0,0254 mm et 1,016 mm (0,001 pouce et 0,040 pouce)friandise;
dans lequel le composant végétal est une poudre végétale soluble dans l'eau ayant une taille de particules comprise entre 10 µm et 750 µm et est présent en une quantité comprise entre 0,1 et 15,0 % en poids par rapport au poids total de la formulation de friandises ou de produits à mâcher comestibles pour animaux de compagnie; et
l'amidon étant présent en une quantité comprise dans la plage d'au moins 50 % en poids de la formulation de friandises ou de produit à mâcher comestibles pour animaux de compagnie.

2. Procédé selon la revendication 1, dans lequel l'étape de soumettre la formulation de friandises ou de produits à mâcher comestibles pour animaux de compagnie à un seul cycle de moulage par injection comprend l'injection de la formulation de friandises ou de produits à mâcher comestibles pour animaux de compagnie dans un moule, le moule étant réglé à une température comprise entre 15 °C et 35 °C.

3. Procédé selon la revendication 1, dans lequel:
la formulation de friandises ou de produits à mâcher comestibles pour animaux de compagnie est un composant comestibles ou un mélange de composants comestibles comprenant une quantité sélectionnée de la poudre de composants végétaux, la formulation de friandises ou de produits à mâcher comestibles pour animaux de compagnie, lorsqu'elle est injectée dans le moule, présentant une réaction thermique qui conduit à la formation du produit moulé avec le noyau et la couche externe sur le noyau, la couche externe présentant au moins une propriété physique ou optique qui diffère d'une propriété correspondante du noyau.

4. Procédé selon la revendication 1, dans lequel:
la poudre végétale est de la poudre de betterave.

5. Procédé selon la revendication 1, dans lequel:
la poudre végétale est présente en une quantité comprise entre 0,1 et 10 % en poids par rapport au poids total de la formulation de friandises ou de produits à mâcher comestibles pour animaux de compagnie; et
l'amidon est présent en une quantité comprise entre 50 et 75 % en poids par rapport au poids total de la formulation de friandises ou de produits à mâcher comestibles pour animaux de compagnie.

6. Procédé selon la revendication 1, dans lequel:
la poudre végétale comprend de la betterave et est présente en une quantité comprise entre 3 et 5 % en poids par rapport au poids total de la formulation de friandises ou de produits à mâcher comestibles pour animaux de compagnie; et
l'amidon est présent en une quantité comprise entre 50 et 60 % en poids par rapport au poids total de la formulation de friandises ou de produits à mâcher comestibles pour animaux de compagnie.

7. Procédé selon la revendication 1, dans lequel la première propriété physique ou optique est une première couleur, la deuxième propriété physique ou optique est une deuxième couleur qui diffère de la première couleur.

8. Procédé selon la revendication 1, dans lequel:
(i) la formulation de friandises ou de produits à mâcher comestibles pour animaux de compagnie comprend un ou plusieurs additifs choisis dans le groupe constitué:
de la glycérine en une quantité comprise entre 10,0 et 20,0 % en poids par rapport au poids total de la formulation de friandises ou de produits à mâcher comestibles pour animaux de compagnie;
de la gélatine en une quantité comprise entre 5,0 et 15,0 % en poids par rapport au poids total de la formulation de friandises ou de produits à mâcher comestibles pour animaux de compagnie;
un exhausteur de goût en une quantité comprise entre 1,0 et 10,0 % en poids par rapport au poids total de la formulation de friandises ou de produits à mâcher comestibles pour animaux de compagnie;
du carbonate de calcium en une quantité comprise entre 1,0 % et 5,0 % en poids par rapport au poids total de la formulation de friandises ou de produits à mâcher comestibles pour animaux de compagnie;
de la fibre de cellulose en une quantité comprise entre 1,0 % et 5,0 % en poids par rapport au poids total de la formulation de friandises ou de produits à mâcher comestibles pour animaux de compagnie; et
de la lécithine en poudre en une quantité comprise entre 0,1 % et 2,5 % en poids par rapport au poids total de la formulation de friandises ou de produits à mâcher comestibles pour animaux de compagnie;
ou
(ii) dans lequel le ou les additifs comprennent:
de la glycérine en une quantité comprise entre 10,0 et 20,0 % en poids par rapport au poids total de la formulation de friandises ou de produits à mâcher comestibles pour animaux de compagnie;
de la gélatine en une quantité comprise entre 5,0 et 15,0 % en poids par rapport au poids total de la formulation de friandises ou de produits à mâcher comestibles pour animaux de compagnie;
un exhausteur de goût en une quantité comprise entre 1,0 et 10,0 % en poids par rapport au poids total de la formulation de friandises ou de produits à mâcher comestibles pour animaux de compagnie;
du carbonate de calcium en une quantité comprise entre 1,0 % et 5,0 % en poids par rapport au poids total de la formulation de friandises ou de produits à mâcher comestibles pour animaux de compagnie;
de la fibre de cellulose en une quantité comprise entre 1,0 % et 5,0 % en poids par rapport au poids total de la formulation de friandises ou de produits à mâcher comestibles pour animaux de compagnie; et
de la lécithine en poudre en une quantité comprise entre 0,1 % et 2,5 % en poids par rapport au poids total de la formulation de friandises ou de produits à mâcher comestibles pour animaux de compagnie.

9. Friandise ou produit à mâcher moulé pour animaux de compagnie, comprenant:
une formulation de friandises ou de produits à mâcher comestibles pour animaux de compagnie comprenant un composant végétal et un ou plusieurs composants comestibles, lesdits un ou plusieurs composants comestibles contenant de l'amidon;
un noyau formé par la formulation de friandises ou de produits à mâcher comestibles pour animaux de compagnie;
une couche externe sur le noyau, la couche externe étant formée par la formulation de friandises ou de produits à mâcher comestibles pour animaux de compagnie; et
la couche externe présentant une première propriété physique ou optique différente d'une deuxième propriété physique ou optique correspondante du noyau et une épaisseur comprise entre 0,0254 mm et 1,016 mm (0,001 pouce et 0,040 pouce);
dans laquelle le composant végétal est une poudre végétale soluble dans l'eau ayant une taille de particules comprise entre 10 µm et 750 µm et est présent en une quantité comprise entre 0,1% et 15,0% en poids par rapport au poids total de la formulation de friandises ou de produits à mâcher comestibles pour animaux de compagnie; et
l'amidon est présent en une quantité comprise dans la plage d'au moins 50 % en poids de la formulation de friandises ou de produits à mâcher comestibles pour animaux de compagnie.

10. Friandise ou produit à mâcher moulé pour animaux de compagnie selon la revendication 9, dans laquelle:
la poudre végétale est de la poudre de betterave.

11. Friandise ou produit à mâcher moulé pour animaux de compagnie selon la revendication 10, dans laquelle:
la poudre végétale est présente en une quantité comprise entre 0,1 et 10 % en poids par rapport au poids total de la formulation de friandises ou de produits à mâcher comestibles pour animaux de compagnie; et
l'amidon est présent en une quantité comprise entre 50 et 75 % en poids par rapport au poids total de la formulation de friandises ou de produits à mâcher comestibles pour animaux de compagnie.

12. Friandise ou produit à mâcher moulé pour animaux de compagnie selon la revendication 10, dans laquelle:
la poudre végétale contient des betteraves et est présente en une quantité comprise entre 3 et 5 % en poids par rapport au poids total de la formulation de friandises ou de produits à mâcher comestibles pour animaux de compagnie; et
l'amidon est présent en une quantité comprise entre 50 et 60 % en poids par rapport au poids total de la formulation de friandises ou de produits à mâcher comestibles pour animaux de compagnie.

13. Friandise ou produit à mâcher moulé pour animaux de compagnie selon la revendication 10, dans laquelle la première propriété physique ou optique est une première couleur, la deuxième propriété physique ou optique est une deuxième couleur différente de la première couleur.

14. Friandise ou produit à mâcher moulé pour animaux de compagnie selon la revendication 10, dans laquelle la formulation de friandises ou de produits à mâcher comestibles pour animaux de compagnie comprend en outre un ou plusieurs additifs choisis dans le groupe constitué:
de la glycérine en une quantité comprise entre 10,0 et 20,0 % en poids par rapport au poids total de la formulation de friandises ou de produits à mâcher comestibles pour animaux de compagnie;
de la gélatine en une quantité comprise entre 5,0 et 15,0 % en poids par rapport au poids total de la formulation de friandises ou de produits à mâcher comestibles pour animaux de compagnie;
un exhausteur de goût en une quantité comprise entre 1,0 % et 10,0 % en poids par rapport au poids total de la formulation de friandises ou de produits à mâcher comestibles pour animaux de compagnie;
du carbonate de calcium en une quantité comprise entre 1,0 % et 5,0 % en poids par rapport au poids total de la formulation de friandises ou de produits à mâcher comestibles pour animaux de compagnie;
de la fibre de cellulose en une quantité comprise entre 1,0 % et 5,0 % en poids par rapport au poids total de la formulation de friandises ou de produits à mâcher comestibles pour animaux de compagnie; et
de la lécithine en poudre en une quantité comprise entre 0,1 % et 2,5 % en poids par rapport au poids total de la formulation de friandises ou de produits à mâcher comestibles pour animaux de compagnie.

15. Formulation de friandises ou de produits à mâcher comestibles pour animaux de compagnie selon la revendication 14, dans laquelle le ou les additifs comprennent:
de la glycérine en une quantité comprise entre 10,0 et 20,0 % en poids par rapport au poids total de la formulation de friandises ou de produits à mâcher comestibles pour animaux de compagnie;
de la gélatine en une quantité comprise entre 5,0 et 15,0 % en poids par rapport au poids total de la formulation de friandises ou de produits à mâcher comestibles pour animaux de compagnie;
un exhausteur de goût en une quantité comprise entre 1,0 % et 10,0 % en poids par rapport au poids total de la formulation de friandises ou de produits à mâcher comestibles pour animaux de compagnie;
du carbonate de calcium en une quantité comprise entre 1,0 % et 5,0 % en poids par rapport au poids total de la formulation de friandises ou de produits à mâcher comestibles pour animaux de compagnie;
de la fibre de cellulose en une quantité comprise entre 1,0 % et 5,0 % en poids par rapport au poids total de la formulation de friandises ou de produits à mâcher comestibles pour animaux de compagnie; et
de la lécithine en poudre en une quantité comprise entre 0,1 % et 2,5 % en poids par rapport au poids total de la formulation de friandises ou de produits à mâcher comestibles pour animaux de compagnie.
